# FASCICULE DE BREVET EUROPEEN

(11) **EP 0 798 541 B1**
(45) Date de publication et mention de la délivrance du brevet: **21.11.2001**
(21) Numéro de dépôt: 97400686.8
(22) Date de dépôt: 26.03.1997
(51) Int. Cl.: G01D 5/14, G01D 5/16

(54) **Capteur magnétique de position**
Magnetischer Positionsgeber
Magnetic position sensor

(30) Priorité: 29.03.1996 FR 9603990
(43) Date de publication de la demande: 01.10.1997
(73) Titulaire: SAGEM SA, 75783 Paris Cédex 16 (FR)
(72) Inventeur: Piaton, Jérôme, 03100 Montluçon (FR); Adenot, Sébastien, 78190 Elancourt (FR); Yonnet, Jean-Paul, 38240 Meylan (FR); Foggia, Albert, 38000 Grenoble (FR)
(74) Mandataire: Gorrée, Jean-Michel

(56) Documents cités:
- EP-A- 0 325 787
- EP-A- 0 544 575
- DE-A- 1 665 618

## Description

La présente invention concerne des perfectionnements apportés aux capteurs magnétiques de position, notamment, mais non exclusivement, aux capteurs magnétiques de position angulaire.

On connaît de nombreux types de capteurs magnétiques de position, notamment de position angulaire, qui toutefois ne donnent pas, ou pas totalement satisfaction aux nombreuses exigences de la pratique pour ce qui est de l'amplitude angulaire de fonctionnement, de la fiabilité et de l'aptitude à être miniaturisés pour autoriser leur implantation dans un environnement encombré. En outre dans certains types de capteurs, en raison même de leurs structures, les rotors sont soumis à des efforts axiaux qui nécessitent la mise en oeuvre de butées axiales qui sont encombrantes et qui accroissent les coûts de fabrication. Enfin, il est fréquent actuellement que les utilisateurs souhaitent se procurer les capteurs en pièces non montées, de manière à pouvoir eux-mêmes les intégrer dans des structures de support et éviter d'avoir à monter les capteurs achevés sur lesdites structures de support, afin d'économiser des organes de fixation et de la place, voire d'accroître la sécurité de fonctionnement en cours d'utilisation.

D'après le document EP-A-0 325 787, on connaît un capteur magnétique de position linéaire comprenant
- une armature fixe comprenant au moins deux pièces polaires définissant, d'une part, un entrefer principal et, d'autre part, deux entrefers secondaires situés respectivement entre des extrémités respectives en regard desdites pièces polaires,
- une armature mobile comportant au moins un aimant permanent à aimantation dirigée selon l'entrefer principal, ladite armature mobile étant apte à se déplacer dans ledit entrefer principal, et
- au moins un détecteur d'induction magnétique disposé dans au moins un des susdits entrefers secondaires.

L'invention a essentiellement pour but de proposer un capteur magnétique de position linéaire ou angulaire qui évite dans toute la mesure du possible les inconvénients précités, et qui en outre présente une fiabilité accrue grâce à une meilleure linéarité de la courbe de variation de l'induction en fonction de la position de l'armature mobile par rapport à l'armature fixe et grâce aussi à une meilleure insensibilité aux variations thermiques ambiantes.

A ces fins, l'invention propose un capteur magnétique de position comprenant
- une armature fixe comprenant au moins deux pièces polaires définissant, d'une part, un entrefer principal et, d'autre part, deux entrefers secondaires situés respectivement entre des extrémités respectives en regard desdites pièces polaires,
- une armature mobile comportant au moins un aimant permanent à aimantation dirigée selon l'entrefer principal, ladite armature mobile étant apte à se déplacer dans ledit entrefer principal, et
- au moins un détecteur d'induction magnétique disposé dans au moins un des susdits entrefers secondaires,
qui, étant agencé conformément à l'invention, se caractérise en ce que l'une des susdites pièces polaires est constituée d'une première pièce polaire et d'une seconde pièce polaire qui sont situées d'un côté dudit entrefer principal, tandis que l'autre des susdites pièces polaires, ou troisième pièce polaire, est située de l'autre côté dudit entrefer principal en regard des susdites première et seconde pièces polaires, et en ce que les deux entrefers secondaires sont formés entre les extrémités respectives en regard de la première pièce polaire et de la troisième pièce polaire, d'une part, et respectivement de la seconde pièce polaire et de la troisième pièce polaire, d'autre part.

Grâce à cet agencement, le partage du flux de l'aimant entre les pièces polaires dans l'entrefer principal génère deux inductions magnétiques dans les entrefers secondaires, qui varient de façon sensiblement linéaire avec la position de l'aimant de l'armature mobile et dont la somme reste sensiblement constante et non nulle. En particulier, en prévoyant de façon préférentielle deux détecteurs respectivement dans les deux entrefers secondaires, il est alors aisé d'effectuer une mesure différentielle à partir des deux valeurs B₁ et B₂ relevées dans les deux entrefers secondaires et de déterminer la grandeur (B₁ - B₂)/(B₁ + B₂) : une telle mesure différentielle relative reste insensible aux variations des niveaux d'aimantation, notamment en fonction de la température, et confère une meilleure fiabilité au capteur.

Une application préférée (bien que non exclusive) des dispositions conformes à l'invention est relative à un capteur de position angulaire sur une amplitude angulaire mécanique maximale d'environ 180° (± 90° de part et d'autre d'une position centrale), lequel capteur de position angulaire est agencé conformément à ce qui est indiqué plus haut et se caractérise en ce qu'il comprend :
- un stator comprenant les susdites trois pièces polaires définissant le susdit entrefer principal qui est circulaire et les susdits entrefers secondaires, et
- un rotor comportant au moins le susdit aimant à aimantation dirigée selon l'entrefer principal circulaire.

Dans un premier mode de réalisation, préféré, le stator comprend deux premières pièces polaires semi-circulaires dont deux extrémités face-à-face définissent, avec la troisième pièce polaire qui est configurée pour s'étendre en regard desdites deux extrémités des premières pièces polaires, les susdits entrefers secondaires ; avantageusement alors la troisième pièce polaire est circulaire, de préférence en forme d'anneau, les deux premières pièces polaires sont, à elles deux, circulaires, de préférence en forme d'anneau et situées coaxialement et parallèlement à la troisième pièce polaire, et l'aimant du rotor est aimanté axialement et est interposé entre lesdites pièces polaires se faisant face axialement. On bénéficie alors notamment de l'avantage de la simplicité de réalisation d'une aimantation axiale de la pièce constituant l'aimant permanent du rotor, et donc de l'avantage d'un moindre coût de fabrication du capteur. On peut alors prévoir que les faces des deux premières pièces polaires et la face en regard de la troisième pièce polaire qui définissent ensemble les entrefers secondaires s'étendent radialement et lesdits entrefers secondaires sont axiaux, ou bien aussi en variante que les deux premières faces polaires et la face en regard de la troisième pièce polaire qui définissent ensemble les entrefers secondaires s'étendent axialement et lesdits entrefers secondaires sont radiaux ; alors les entrefers secondaires sont définis par des faces en regard de plots en saillie radiale appartenant respectivement aux trois pièces statoriques et situés en dehors de la trajectoire suivie par l'aimant du rotor.

Dans un second mode de réalisation possible, les deux premières pièces polaires sont en forme de demi-bagues, la troisième pièce polaire est en forme de noyau central coaxial aux deux demi-bagues et présente au moins une saillie radiale s'étendant en regard d'au moins un intervalle formé entre les extrémités en regard des premières pièces polaires, et l'aimant permanent du rotor est aimanté radialement et interposé radialement entre le noyau central et la bague externe se faisant face radialement. Bien qu'il soit plus difficile et donc plus coûteux d'aimanter radialement la pièce formant l'aimant permanent du rotor, une telle configuration peut trouver son emploi dans des applications spécifiques. On peut alors prévoir que la saillie radiale de la troisième pièce statorique est décalée axialement par rapport aux deux premières pièces statoriques et chevauche extérieurement le chant de celles-ci, les entrefers secondaires étant alors axiaux, ou bien encore que la saillie radiale de la troisième pièce statorique s'étend en regard des deux premières pièces statoriques, les entrefers secondaires étant alors radiaux.

L'invention sera mieux comprise à la lecture de la description détaillée qui suit de certains modes de réalisation donnés uniquement à titre d'exemples non limitatifs. Dans cette description on se réfère aux dessins annexés sur lesquels :
- la figure 1 est une vue très schématique illustrant la conception de principe d'un capteur conforme à l'invention ;
- la figure 2 est un graphique montrant les variations des flux dans le capteur de la figure 1 ;
- la figure 3 est une vue schématique, en perspective, d'un mode de réalisation de capteur de position linéaire agencé conformément à l'invention ; et
- les figures 4 à 6 sont des vues schématiques en perspective de trois modes de réalisation (celui de la fig. 4 étant préféré) de capteur de position angulaire agencés conformément à l'invention.

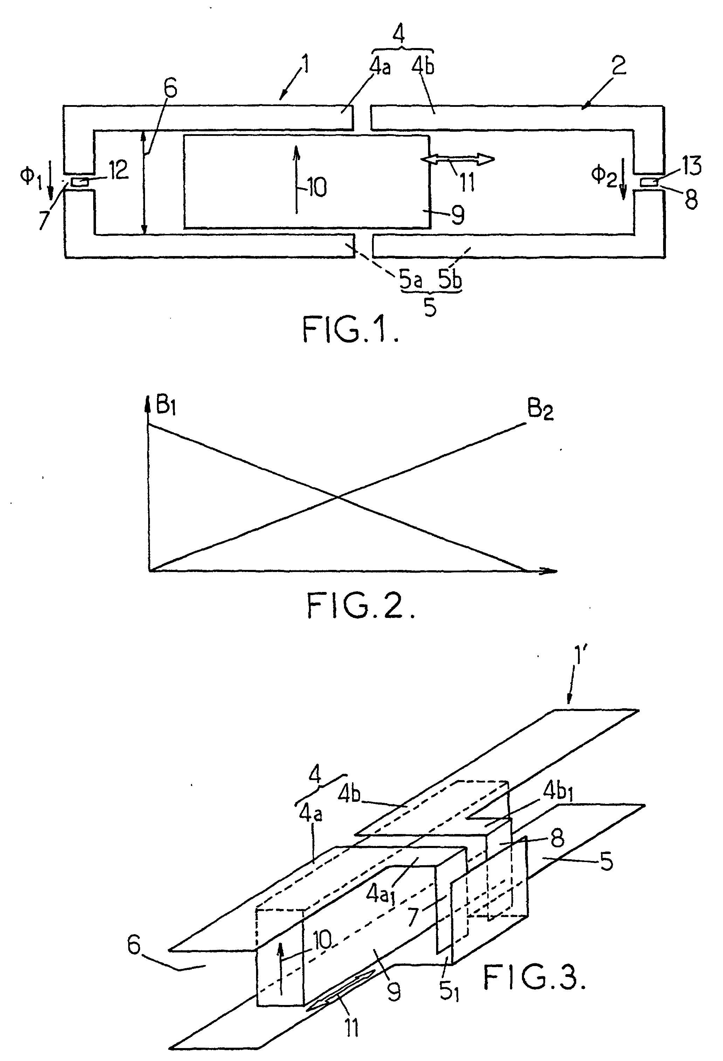

En se reportant à la figure 1 tout d'abord, le capteur de position désigné dans son ensemble par la référence numérique 1 comprend une armature fixe 2 comportant au moins trois pièces polaires 4 (pièces polaires supérieures sur le dessin) et 5 (pièce polaire inférieure sur le dessin) qui sont agencées pour définir :
- d'une part, un entrefer principal 6 de telle manière que deux pièces polaires 4a et 4b soient situées d'un même côté de l'entrefer principal 6 et que au moins la troisième pièce 5 (qui peut elle-même être constituée de deux parties 5a et 5b dans certains modes de réalisation) soit située de l'autre côté de l'entrefer principal 6 ;
- et, d'autre part, deux entrefers secondaires 7 et 8 situés respectivement entre les première et troisième pièces polaires 4a et 5 (ou 5a) et les deuxième et troisième pièces polaires et 5 (ou 5b).

Dans l'entrefer principal se trouve une armature mobile 9 qui comporte ou qui est constituée par au moins un aimant permanent à aimantation dirigée selon l'entrefer principal (flèche 10), ladite armature mobile 9 étant apte à se déplacer dans l'entrefer 6 transversalement à la direction d'aimantation (double flèche 11), le déplacement étant provoqué par un organe externe (non représenté) auquel l'armature mobile est accouplé directement ou indirectement et dont on souhaite déterminer la position et/ou l'amplitude de déplacement.

Enfin au moins un détecteur d'induction magnétique (par exemple une sonde de Hall) est disposé dans un entrefer secondaire 7 ou 8 pour y mesurer l'induction respective B₁ ou B₂. De préférence, on prévoit deux détecteurs 12 et 13 disposés respectivement dans les deux entrefers 7 et 8 pour une mesure simultanée de B₁ et B₂.

En fonction de la position de l'aimant par rapport aux deux pièces polaires 4a et 4b, les lignes de champ se répartissent de façon corrélative à cette position dans les deux pièces polaires 4a et 4b ; les deux inductions B₁ et B₂ mesurées dans les deux entrefers 7 et 8 sont donc représentatives de la position de l'aimant et varient en sens inverses l'une de l'autre ; lorsque l'aimant est en position centrée par rapport aux deux pièces polaires 4a et 4b, les deux inductions B₁ et B₂ sont sensiblement égales. La figure 2 illustre les variations respectives des inductions B₁ et B₂ (en ordonnées) en fonction du déplacement de l'aimant (en abscisses).

On notera que les deux inductions B₁ et B₂ varient de façon sensiblement linéaire avec la position de l'aimant et que leur somme reste sensiblement constante et non nulle comme visible sur le graphique de la fig. 2. Un dispositif équipé de deux détecteurs se prête particulièrement bien à des mesures différentielles pour la détermination des quantités B₁ - B₂ et B₁ + B₂. Il est alors possible de déterminer la quantité (B₁ - B₂)/(B₁ + B₂), valeur de mesure différentielle relative qui est insensible aux variations des niveaux d'aimantation, notamment en fonction de la température : il en résulte une détermination plus précise de la position de l'aimant et de l'armature associée 9, et donc de l'organe auquel celle-ci est accouplée.

La disposition de base qui vient d'être décrite peut donner lieu à divers modes de réalisation.

La figure 3 illustre, très schématiquement, un capteur à déplacement linéaire 1'. En conservant les mêmes références numériques pour désigner les éléments identiques à ceux de la figure 1, les pièces polaires 4a et 4b s'étendent rectilinéairement dans le prolongement l'une de l'autre, tandis que la pièce 5, unique, s'étend rectilinéairement en regard des pièces 4a et 4b et à distance de celles-ci pour constituer l'entrefer principal 6 rectiligne. L'armature mobile 9, réalisée sous forme d'un bloc rectiligne, est disposée dans l'entrefer 6 entre les pièces 4a, 4b et 5 et est mobile linéairement (double flèche 11). Chaque pièce polaire 4a, 4b et 5 comporte une excroissance latérale désignée sur la figure 3 par les références respectives 4a₁, 4b₁ et 5₁, ces excroissances étant conformées de manière que les deux excroissances 4a₁ et 4b₁ soient disposées côte à côte avec, chacune, une face située en regard et à distance de la face correspondante, unique, de l'excroissance 5₁, afin de constituer les deux entrefers secondaires 7 et 8 respectivement.

Bien entendu, d'autres agencements sont possibles en conservant la même structure de base et le même mode de fonctionnement.

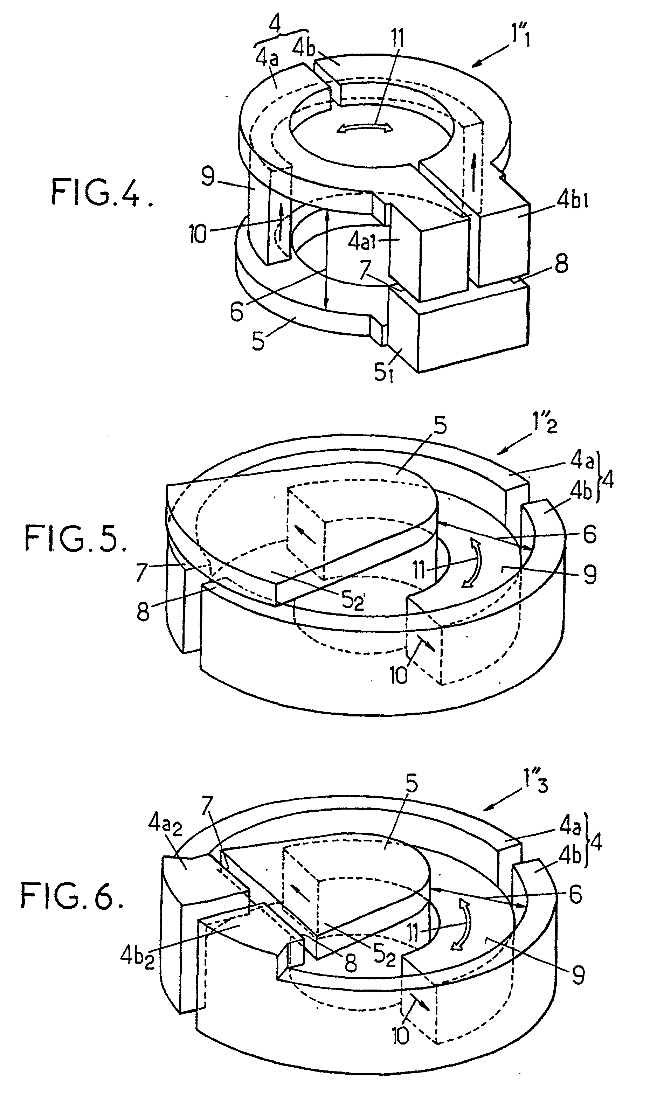

Aux figures 4 à 6 sont représentés trois exemples de réalisation de capteur à déplacement rotatif respectivement 1"₁ à 1"₃.

Dans le mode de réalisation préféré de la figure 4, les pièces polaires 4a et 4b sont, à elles deux, circulaires et de préférence, pour éviter des fuites magnétiques excessives, elles sont agencées sous forme de deux demi-anneaux non jointifs ; la pièce polaire 5 est circulaire et de préférence, également pour éviter des fuites magnétiques, elle est constituée sous forme d'un anneau complet. Dans l'entrefer principal 6 formé par les faces axialement en regard de ces pièces polaires est disposée l'armature mobile 6 en forme de demi-cercle (étendue d'environ 180°). L'aimant constituant ou inclus dans l'armature 9 a donc une aimantation dirigée axialement (flèche 10), c'est-à-dire parallèlement à l'axe commun des anneaux formés respectivement par la pièce polaire 5 et les pièces polaires 4a, 4b. De la même manière que pour le capteur 1' de la figure 3, des excroissances externes respectives des pièces polaires déterminent les entrefers secondaires 7 et 8 qui s'étendent alors axialement (les détecteurs d'induction ne sont pas représentés).

Dans le capteur 1"₁ ainsi constitué, l'armature 9 est mobile circulairement (double flèche 11), tout en conservant le mode de fonctionnement indiqué plus haut. L'intérêt particulier de ce capteur réside dans la direction axiale d'aimantation de l'aimant qui peut être obtenue dans des conditions économiques intéressantes, ce qui conduit à un capteur d'un prix de revient qui peut être très faible et compatible avec les exigences d'une fabrication en très grande série et d'une très large diffusion.

Bien entendu, il est possible de prévoir un agencement différent des excroissances 4a₁ et 4b₁ de manière à constituer des entrefers secondaires 7 et 8 d'étendue radiale.

Les figures 5 et 6 montrent deux modes de réalisation de capteurs à déplacement rotatif dans lesquels l'aimant est aimanté radialement. Bien que de tels aimants soient plus difficiles à fabriquer et donc plus coûteux que des aimants à aimantation axiale, des capteurs de ce type peuvent toutefois s'avérer intéressant pour des applications spécifiques.

Dans le capteur 1"₂ de la figure 5, les deux pièces polaires 4a et 4b sont en forme approximative de deux demi-cercles et réunies, sans être aboutées, en un anneau ouvert, tandis que la pièce polaire 5 est un noyau central, de sorte que l'entrefer principal 6 est déterminé par les faces radialement en regard des pièces 4a, 4b et 5. Comme indiqué plus haut, l'armature mobile 9 est en forme de demi-cercle et l'aimant qu'elle comporte ou qui la constitue est aimanté radialement et le déplacement de l'armature est circulaire (double flèche 11). La pièce polaire 5 en forme de noyau central comporte une excroissance radiale 5₂ qui est décalée axialement par rapport aux pièces polaires 4a, 4b et qui s'étend jusqu'en regard du bord latéral de celle-ci. Cette excroissance 5₂ est conformée pour chevaucher les deux pièces polaires 4a et 4b (dans l'exemple représenté, l'excroissance 5₂ est en forme de secteur de cercle) et elle détermine avec lesdites pièces 4a et 4b les deux entrefers secondaires 7 et 8 qui s'étendent alors axialement.

La figure 6 montre un capteur 1"₃ qui est une variante de réalisation de l'agencement de la figure 5, selon laquelle les pièces polaires 4a et 4b sont pourvues de deux excroissances respectives 4a₂ et 4b₂ en saillie radiale vers l'intérieur, au même niveau que l'excroissance 5₂. Les faces en regard des excroissances 4a₂, 4b₂ et 5₂ déterminent les deux entrefers secondaires 7 et 8 respectivement, qui sont ici d'étendue radiale.

Grâce aux dispositions conformes à l'invention, on est en mesure de constituer des capteurs de position angulaire à un aimant qui permettent d'effectuer une détection linéaire de position sur une amplitude complète de 180° (± 90° de part et d'autre d'une position centrale de référence représentée par la position centrée de l'armature mobile par rapport aux deux pièces polaires 4a et 4b) et qui autorisent des mesures différentielles conduisant à des mesures précises et insensibles aux variations de température.

Bien entendu des capteurs aptes à fonctionner sur des amplitudes différentes peuvent être réalisés en modifiant le nombre des aimants ou leur géométrie (en particulier l'angle d'ouverture).

Comme il va de soi et comme il résulte déjà de ce qui précède, l'invention ne se limite nullement à ceux de ses modes d'application et de réalisation qui ont été plus particulièrement envisagés ; elle en embrasse au contraire toutes les variantes. En particulier, on notera que, dans la description qui précède, l'armature 9 est qualifiée de mobile alors que l'armature 2 est qualifiée de fixe car il s'agit là du cas le plus commun de mise en oeuvre de l'invention. Toutefois, il est évident que seul intervient le mouvement relatif de l'armature 9 et de l'armature 2 et que, pour certaines applications, il est possible de faire en sorte que ce soit l'armature qui est mobile et solidarisée à un organe dont on souhaite détecter la position, alors que l'armature 9 est fixe.

## Revendications

1. Capteur magnétique de position (1, 1', 1") comprenant :
- une armature fixe (2) comprenant au moins deux pièces polaires (4 ; 5) définissant, d'une part, un entrefer principal (6) et, d'autre part, deux entrefers secondaires (7, 8) situés respectivement entre des extrémités respectives en regard desdites pièces polaires (4 ; 5),
- une armature mobile (9) comportant au moins un aimant permanent à aimantation dirigée selon l'entrefer principal (6), ladite armature mobile (9) étant apte à se déplacer dans ledit entrefer principal (6), et
- au moins un détecteur d'induction magnétique (12, 13) disposé dans au moins un des susdits entrefers secondaires (7, 8),
**caractérisé en ce que** l'une (4) des susdites pièces polaires est constituée d'une première pièce polaire (4a) et d'une seconde pièce polaire (4b) qui sont situées d'un côté dudit entrefer principal (6), tandis que l'autre (5) des susdites pièces polaires, ou troisième pièce polaire (5), est située de l'autre côté dudit entrefer principal (6) en regard des susdites première et seconde pièces polaires (4a, 4b),
et **en ce que** les deux entrefers secondaires (7, 8) sont formés entre les extrémités respectives en regard de la première pièce polaire (4a) et de la troisième pièce polaire (5), d'une part, et respectivement de la seconde pièce polaire (4b) et de la troisième pièce polaire (5), d'autre part.

2. Capteur selon la revendication 1, **caractérisé en ce qu'**il comprend deux détecteurs d'induction magnétique (12, 13) disposés respectivement dans les deux entrefers secondaires (7, 8).

3. Capteur (1") selon la revendication 1 ou 2, **caractérisé en ce qu'**il capte des positions angulaires sur une amplitude angulaire mécanique maximale d'environ 180°, à savoir ± 90° de part et d'autre d'une position centrale, et qu'il comprend :
- un stator (2) comprenant les susdites trois pièces polaires (4a, 4b ; 5) définissant le susdit entrefer principal (6) qui est circulaire et les susdits entrefers secondaires (7, 8), et
- un rotor (9) comportant au moins le susdit aimant à aimantation dirigée selon l'entrefer principal circulaire (6).

4. Capteur selon la revendication 3, **caractérisé en ce que** le stator (2) comprend deux premières pièces polaires semi-circulaires (4a, 4b) dont deux extrémités face-à-face définissent, avec la troisième pièce polaire (5) qui est configurée pour s'étendre en regard desdites deux extrémités des premières pièces polaires, les susdits entrefers secondaires (7, 8).

5. Capteur selon la revendication 4, **caractérisé en ce que** la troisième pièce polaire (5) est circulaire, **en ce que** les deux premières pièces polaires (4a, 4b) sont, à elles deux, circulaires et situées coaxialement et parallèlement à la troisième pièce polaire, et **en ce que** l'aimant du rotor (9) est aimanté axialement et est interposé entre lesdites pièces polaires se faisant face axialement.

6. Capteur selon la revendication 5, **caractérisé en ce que** les deux premières pièces polaires sont, à elles deux, en forme d'anneau.

7. Capteur selon la revendication 5 ou 6, **caractérisé en ce que** la troisième pièce polaire est en forme d'anneau.

8. Capteur selon l'une quelconque des revendications 5 à 7, **caractérisé en ce que** les faces des deux premières pièces polaires (4a, 4b) et la face en regard de la troisième pièce polaire (5) qui définissent ensemble les entrefers secondaires s'étendent radialement et lesdits entrefers secondaires (7, 8) sont axiaux.

9. Capteur selon l'une quelconque des revendications 5 à 7, **caractérisé en ce que** les faces des deux premières pièces polaires (4a, 4b) et la face en regard de la troisième pièce polaire (5) qui définissent ensemble les entrefers secondaires s'étendent axialement et lesdits entrefers secondaires sont radiaux.

10. Capteur selon la revendication 4 ou 5, **caractérisé en ce que** les entrefers secondaires (7, 8) sont définis par des faces en regard de plots (4a₁, 4b₁ ; 5₁) en saillie radiale appartenant respectivement aux trois pièces statoriques (4a, 4b ; 5) et situés en dehors de la trajectoire suivie par l'aimant du rotor.

11. Capteur selon la revendication 4, **caractérisé en ce que** les deux premières pièces polaires (4a, 4b) sont en forme de demi-bagues, **en ce que** la troisième pièce polaire est en forme de noyau central (5) coaxial aux deux demi-bagues et présente au moins une saillie radiale (5₂) s'étendant en regard d'au moins un intervalle formé entre les extrémités en regard des premières pièces polaires, et **en ce que** l'aimant permanent du rotor (9) est aimanté radialement et interposé radialement entre le noyaux central (5) et la bague externe (4a, 4b) se faisant face radialement.

12. Capteur selon la revendication 11, **caractérisé en ce que** la saillie radiale (5₂) de la troisième pièce statorique (5) est décalée axialement par rapport aux deux premières pièces statoriques (4a, 4b) et chevauche extérieurement le chant de celles-ci, les entrefers secondaires (7, 8) étant axiaux.

13. Capteur selon la revendication 11, **caractérisé en ce que** la saillie radiale (5₂) de la troisième pièce statorique (5) s'étend en regard des deux premières pièces statoriques (4a, 4b), les entrefers secondaires étant radiaux.

## Patentansprüche

1. Magnetischer Positionssensor (1, 1', 1"), der umfaßt:
- einen ruhenden Anker (2), der wenigstens zwei Polschuhe (4; 5) enthält, die einerseits einen Hauptluftspalt (6) und andererseits zwei Nebenluftspalte (7, 8) bestimmen, von denen jeweils einer zwischen sich jeweils gegenüberstehenden Enden der Polschuhe (4; 5) liegt,
- einen beweglichen Anker (9), der wenigstens einen Permanentmagneten zur entsprechend dem Hauptluftspalt (6) gerichteten Magnetisierung enthält, wobei der bewegliche Anker (9) dazu geeignet ist, sich im Hauptluftspalt (6) zu verschieben, und
- mindestens einen Magnetinduktionsdetektor (12, 13), der in wenigstens einem der Nebenluftspalte (7, 8) angeordnet ist,
**dadurch gekennzeichnet, daß** der eine (4) der Polschuhe aus einem ersten Polschuh (4a) und aus einem zweiten Polschuh (4b) gebildet ist, die auf einer Seite des Hauptluftspaltes (6) liegen, wogegen der andere (5) der Polschuhe oder ein dritter Polschuh (5) auf der anderen Seite des Hauptluftspaltes (6) gegenüberstehend zu dem ersten und zweiten Polschuh (4a, 4b) liegt,
und daß die beiden Nebenluftspalte (7, 8) zwischen den jeweils gegenüberstehenden Enden des ersten Polschuhs (4a) und des dritten Polschuhs (5) einerseits bzw. des zweiten Polschuhs (4b) und des dritten Polschuhs (5) andererseits gebildet sind.

2. Sensor nach Anspruch 1, **dadurch gekennzeichnet, daß** er zwei Magnetinduktionsdetektoren (12, 13) umfaßt, von denen jeweils einer in einem der beiden Nebenluftspalte (7, 8) angeordnet ist.

3. Sensor (1") nach Anspruch 1 oder 2, **dadurch gekennzeichnet, daß** er Winkelpositionen über eine maximale mechanische Winkelamplitude von etwa 180°, d.h. ± 90° beiderseits einer mittleren Position, erfaßt und daß er umfaßt:
- einen Stator (2), der die drei Polschuhe (4a, 4b; 5) umfaßt, die den Hauptluftspalt (6), der kreisförmig ist, und die Nebenluftspalte (7, 8) bestimmen, und
- einen Rotor (9), der wenigstens den Magneten zur entsprechend dem kreisförmigen Hauptluftspalt (6) gerichteten Magnetisierung enthält.

4. Sensor nach Anspruch 3, **dadurch gekennzeichnet, daß** der Stator (2) zwei halbkreisförmige erste Polschuhe (4a, 4b) umfaßt, von dem zwei sich frontal gegenüberstehende Enden mit dem dritten Polschuh (5), der so ausgebildet ist, daß er sich gegenüberliegend zu den beiden Enden der ersten Polschuhe erstreckt, die Nebenluftspalte (7, 8) bestimmen.

5. Sensor nach Anspruch 4, **dadurch gekennzeichnet, daß** der dritte Polschuh (5) kreisförmig ist, daß die beiden ersten Polschuhe (4a, 4b) als Paar kreisförmig sind und koaxial und parallel zum dritten Polschuh liegen und daß der Magnet des Rotors (9) axial magnetisch ist und zwischen den Polschuhen angeordnet ist, die sich axial gegenüberstehen.

6. Sensor nach Anspruch 5, **dadurch gekennzeichnet, daß** die beiden ersten Polschuhe als Paar die Form eines Ringes aufweisen.

7. Sensor nach Anspruch 5 oder 6, **dadurch gekennzeichnet, daß** der dritte Polschuh ringförmig ist.

8. Sensor nach einem der Ansprüche 5 bis 7, **dadurch gekennzeichnet, daß** sich die Flächen der beiden ersten Polschuhe (4a, 4b) und die gegenüberstehende Fläche des dritten Polschuhs (5), die zusammen die Nebenluftspalte bestimmen, radial erstrecken und die Nebenluftspalte (7, 8) axial sind.

9. Sensor nach einem der Ansprüche 5 bis 7, **dadurch gekennzeichnet, daß** sich die Flächen der beiden ersten Polschuhe (4a, 4b) und die gegenüberstehende Fläche des dritten Polschuhs (5), die zusammen die Nebenluftspalte bestimmen, axial erstrecken und die Nebenluftspalte radial sind.

10. Sensor nach Anspruch 4 oder 5, **dadurch gekennzeichnet, daß** die Nebenluftspalte (7, 8) durch sich gegenüberstehende Flächen von radial hervorstehenden Klötzen (4a₁, 4b₁; 5₁) bestimmt sind, von denen jeder zu jeweils einem der drei Statorteile (4a, 4b; 5) gehört und außerhalb der vom Magneten des Rotors verfolgten Bahn liegt.

11. Sensor nach Anspruch 4, **dadurch gekennzeichnet, daß** die beiden ersten Polschuhe (4a, 4b) die Form von Halbringen aufweisen, daß der dritte Polschuh die Form eines koaxialen Mittelkernes (5) zu den beiden Halbringen hat und wenigstens einen radialen Vorsprung (5₂) aufweist, der sich gegenüberstehend zu wenigstens einem Zwischenraum erstreckt, der zwischen den sich gegenüberliegenden Enden der ersten Polschuhe gebildet ist, und daß der Permanentmagnet des Rotors (9) radial magnetisch und zwischen dem Mittelkern (5) und dem äußeren Ring (4a, 4b) angeordnet ist, die sich radial gegenüberstehen.

12. Sensor nach Anspruch 11, **dadurch gekennzeichnet, daß** der radiale Vorsprung (5₂) des dritten Statorteils (5) axial in bezug auf zwei erste Statorteile (4a, 4b) versetzt ist und die Kante derselben überdeckt, wobei die Nebenluftspalte (7, 8) axial sind.

13. Sensor nach Anspruch 11, **dadurch gekennzeichnet, daß** sich der radiale Vorsprung (5₂) des dritten Statorteils (5) gegenüberstehend zu den beiden ersten Statorteilen (4a, 4b) erstreckt, wobei die Nebenluftspalte radial sind.

## Claims

1. A magnetic position sensor (1, 1', 1'') comprising:
- a fixed frame (2) comprising at least two pole pieces (4; 5) defining firstly a main air gap (6) and secondly two secondary air gaps (7, 8) situated respectively between the respective facing ends of the said pole pieces (4; 5),
- a moving frame (9) comprising at least one permanent magnet magnetised in the direction of the main air gap (6), the moving frame (9) being adapted to move in the main air gap (6), and
- at least one magnetic induction detector (12, 13) disposed in at least one of the said secondary air gaps (7, 8),
**characterised in that** one (4) of the said pole pieces comprises a first pole piece (4a) and a second pole piece (4b) situated on one side of the main air gap (6) whereas the other (5) pole piece or third pole piece (5) is situated on the other side of the main air gap (6) facing the first and second pole pieces (4a, 4b), and
**in that** the two secondary air gaps (7, 8) are formed between the respective facing ends of the first pole piece (4a) and the second pole piece (5) on the one hand and of the second pole piece (4) and of the third pole piece (5) on the other hand.

2. A sensor according to claim 1, **characterised in that** it comprises two magnetic induction detectors (12, 13) respectively disposed in the two secondary air gaps (7, 8).

3. A sensor (1'') according to claim 1 or 2,
**characterised in that** it picks up angular positions over a maximum mechanical angular amplitude of about 180°, i.e. ± 90° on either side of a central position, and **in that** it comprises:
- a stator (2) comprising the said three pole pieces (4a, 4b; 5) defining the main air gap (6), which is circular, and the said secondary air gaps (7, 8), and
- a rotor (9) comprising at least the said magnet magnetised in the direction of the circular main air gap (6).

4. A sensor according to claim 3, **characterised in that** the stator (2) comprises two semicircular first pole pieces (4a, 4b) having two facing ends defining the said secondary air gaps (7, 8) in co-operation with the third pole piece (5), which is shaped so as to extend opposite the said two ends of the first pole pieces.

5. A sensor according to claim 4, **characterised in that** the third pole piece (5) is circular, **in that** the two first pole pieces (4a, 4b) are both circular and situated coaxially and parallel with the third pole piece, and **in that** the magnet of the rotor (9) is axially magnetised and is interposed between the said axially facing pole pieces.

6. A sensor according to claim 5, **characterised in that** the two first pole pieces are both annular.

7. A sensor according to claim 5 or 6,
**characterised in that** the third pole piece is annular.

8. A sensor according to any of claims 5 to 7,
**characterised in that** the surfaces of the two first pole pieces (4a, 4b) and the facing surface of the third pole piece (5), which together define the secondary air gaps, extend radially and the secondary air gaps (7, 8) are axial.

9. A sensor according to any of claims 5 to 7,
**characterised in that** the surfaces of the two first pole pieces (4a, 4b) and the facing surface of the third pole piece (5), which together define the secondary air gaps, extend axially and the secondary air gaps are radial.

10. A sensor according to claim 4 or 5,
**characterised in that** the secondary air gaps (7, 8) are defined by the facing surfaces of studs (4a₁, 4b₁; 5₁) projecting radially and respectively belonging to the three stator pieces (4a, 4b; 5) and situated outside the trajectory followed by the rotor magnet.

11. A sensor according to claim 4, **characterised in that** the two first pole pieces (4a, 4b) are in the form of half-rings, the third pole piece is in the form of a central core (5) coaxial with the two half-rings and has at least one radial projection (5₂) extending opposite at least one gap formed between the facing ends of the first pole pieces, and **in that** the permanent magnet of the rotor (9) is magnetised radially and radially interposed between the central core (5) and the outer ring (4a, 4b), which radially face one another.

12. A sensor according to claim 11, **characterised in that** the radial projection (5₂) from the third stator piece (5) is axially offset relative to the two first stator pieces (4a, 4b) and externally straddles the edges thereof, the secondary air gaps (7, 8) being axial.

13. A sensor according to claim 11, **characterised in that** the radial projection (5₂) from the third stator piece (5) extends opposite the two first stator pieces (4a, 4b), the secondary air gaps being radial.
